Europäisches Patentamt

**European Patent Office**

**Office européen des brevets**

(11) Publication number: **0 218 556**
**A1**

## (12) EUROPEAN PATENT APPLICATION

(21) Application number: **86830237.3**

(22) Date of filing: **29.08.86**

(51) Int. Cl.⁴: **B 60 R 11/02**

(30) Priority: **02.09.85 IT 4851385**

(43) Date of publication of application: **15.04.87**
**Bulletin 87/16**

(84) Designated Contracting States: **CH DE FR GB LI NL**

(71) Applicant: **NUOVA AUTOVOX S.p.A., 981, via Salaria,**
**I-00199 Roma (IT)**

(72) Inventor: **c/o Nuova Autovox SpA, Via Salaria, 981,**
**I-00199 Roma (IT)**

(74) Representative: **Cavattoni, Massimo, STUDIO TECNICO**
**BREVETTI MASSIMO CAVATTONI Via Archimede, 144,**
**I-00197 Roma (IT)**

(54) **A device for fastening a car radio to the dashboard of a vehicle.**

(57) In the device for fastening a car radio (20) to the dashboard (12) of a vehicle provided with a space with a number of curbs (18) made between an insertion mouth and respective recesses (16), according to the present invention, one or more locking cam members (22,24) are moved from an inoperative position, which is inside the outline of the mouth of the dashboard, to a fastening position, in which each locking cam member (22,24) extends into a relating recess (16) and its cam engages and blocks the relating curb (18).

In an embodiment form, a slide (26) provides for rotating two locking members (22,24), in the form of cam sectors, by means of a toothing.

The slide (26) is in turn reciprocated by means of a threaded screw (46), accessible from the front panel (44) of the car radio (20).

## A device for fastening a car radio to the dashboard of a vehicle.

The present invention refers to a device for fastening a car radio, of the so-called fixed type, into the suitable space provided in a vehicle by the manufacturer of the vehicle itself.

It is known that the vehicle manufacturers provide, in the dashboard of the vehicle itself or near it, a space for housing a car radio. Such a space generally used to have different size from one manufacturer to another and thus it made the fastening of a car radio problematical, especially if it was of a not appropriate or not particularly adaptable type, often rendering the recourse to artisan technology indispensable in order to fasten the car radio itself.

The main disadvantage of such devices, so far as it is known, for fastening the car radios to the dashboards of the vehicles, consists in the presence of resilient elements, designed to make the recovery of the dimensional differences in the vehicle structure.

Now, an international regulation (ISO 7736 - 1984) has been recently enforced, which unifies and standardizes the dimensions of the spaces, which are kept for the mounting of a car radio and its electrical connections, inside the vehicles.

Therefore, the main object of the present invention is to provide a device for fastening a car radio to the dashboard of a vehicle into a space according to the cited regulation.

Another object of the present invention is to carry out a device for fastening a car radio which provides for a rigid fastening to the vehicle structure and is capable of bearing all the stresses typical of the motion of a vehicle in a reliable and durable manner.

A further object of the present invention is to carry out a device of the already cited type, which provides for a quick and simple assembling of the car radio into the suitable space.

00348E

Still another object of the present invention is to carry out such a device, that comprises a reduced number of parts, simple and inexpensive in manufacturing and thus suitable for mass production.

According to the present invention, a device for fastening a car radio to the dashboard of a vehicle is characterized in that one or more locking cam members are moved from an inoperative position, which is inside the outline of the mouth of the dashboard, to a fastening position, in which each locking cam member extends into a relating recess and its cam engages and blocks the relating curb.

The fact that the locking cam members act without relying on forces caused by the elasticity allows the main advantage of a rigid fastening to the vehicle structure to be achieved, suitable to bear all the stresses typical of the motion of a vehicle in a reliable and durable manner.

In the following, the present invention will be further clarified from the description of a form of practical embodiment of the device for fastening a car radio to the dashboard of a vehicle, a description made in a purely illustrative and not limitative way, with reference to the accompanying drawings, in which:

figure 1 is a partial front view of the dashboard of a vehicle provided with a space according to the cited ISO regulation;

figure 2 is a partial cross-section in an enlarged scale of the dashboard, taken along line II - II of figure 1;

figure 3 shows the dashboard of figure 2 during the insertion of a car radio provided with devices according to the present invention;

figure 4 is similar to figure 3 and shows a car radio fastened by means of devices according to the present invention;

figure 5 is a partial cross-section of the car radio, taken along line V - V of figure 3; and

00348E

figure 6 is a partial cross-section of the car radio, taken along line VI – VI of figure 5.

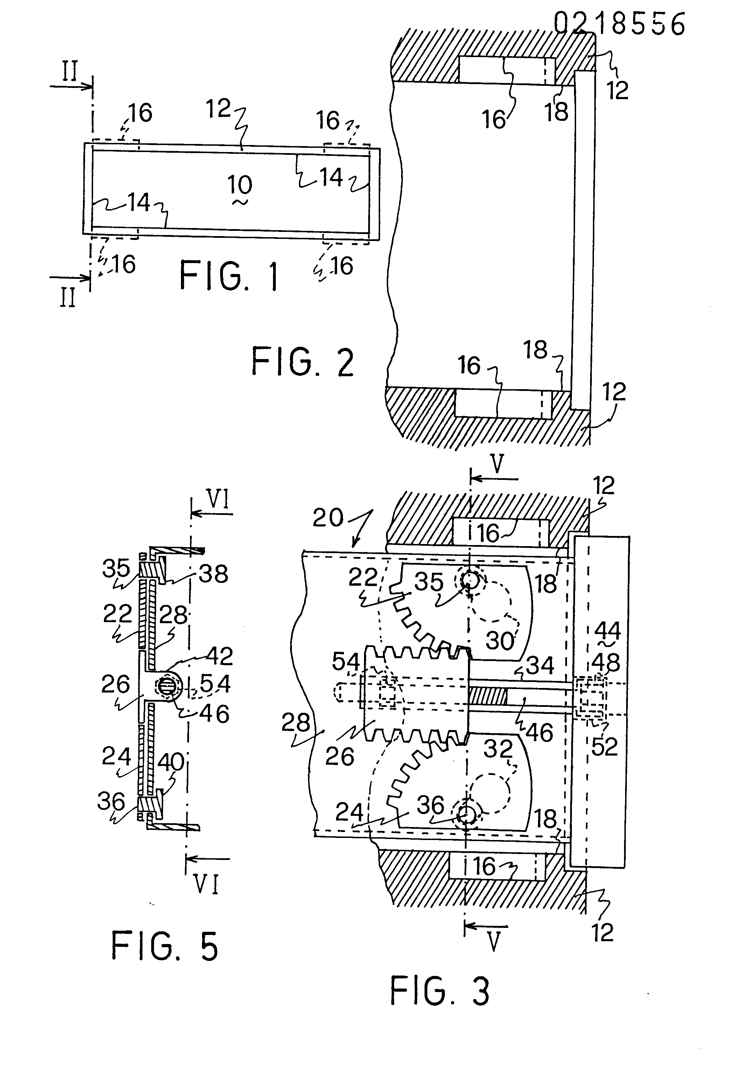

With reference now to the accompanying drawings, and particularly to figure 1 and 2 thereof, a space or receptacle 10, provided on the dashboard 12 of a vehicle according to the cited regulation ISO 7736 – 1984, has a mouth 14 for the insertion and fastening of a car radio receiver of a standard type.

Near the car radio insertion mouth 14, opened toward the interior of the vehicle, a number of recesses 16 are provided, located at the top and bottom surfaces of the receptacle itself, as well as other possible recesses (not shown) located at the lateral surfaces of the receptacle itself.

Curbs 18 are bounded by the corresponding recesses 16 toward the inside of the standard receptacle, the curbs 18 being faced, on the other side, toward the outside of the receptacle itself. The thickness of such curbs is standardized in a thickness variable between 4 mm (as shown by a solid line) and 6 mm (as shown by a broken line), but in practice the variation in thickness from one vehicle model to another can be far greater.

Just these such curbs and corresponding recesses are the standard members which allow the fastening and front anchoring of a car radio receiver of a fixed type.

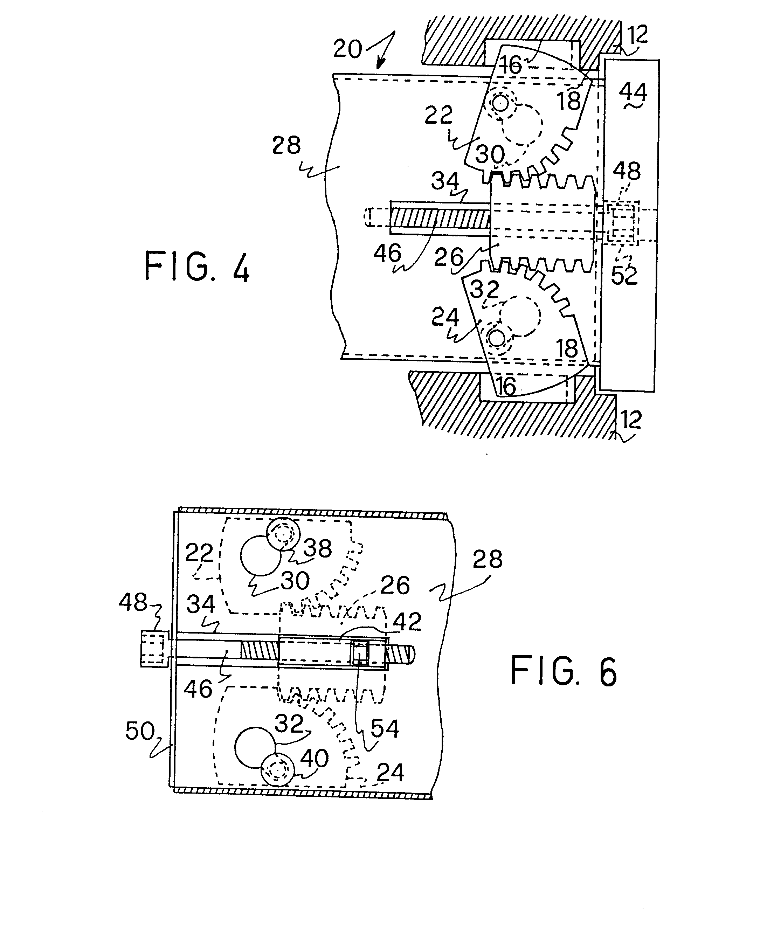

According to the present invention, as better shown in figures 3 and 4, a car radio of a fixed type is provided with two fastening devices, each comprising two cam sectors 22 and 24 and a slide 26, and located outside each outer lateral wall 28 of the car radio 20 itself.

In particular, on the outer lateral wall 28 of the car radio 20, two openings 30 and 32 and a slot 34 are provided.

The cam sectors 22 and 24 are provided with a pin 35 and 36, respec-

00348E

tively (see figure 5), which have each a head 38 and 40, respectively.

Each of the pins 35 and 36 is inserted with its own head 38 or 40 into the widened part of the openings 30 and 32 and made to slide toward the narrowed circular part of the openings 30 and 32 themselves. In this position, the cam sectors 22 and 24 can only rotate around the axis of the pins 35 and 36.

The slide 26 has an extension 42 which is inserted into the slot 34 so that it can only reciprocate parallel to itself, between the inoperative position of the fastening device, shown in figure 3, and the opposite position, at the other end of the slot 34, near the front panel 44 of the car radio 20.

The cam sectors 22 and 24 and the slide 26 are linked with one another through toothings, so that a rotation of the sectors 22 and 24 corresponds to a reciprocation of the slide 26.

As better shown in figure 6, the displacement of the slide 26 is actuated by means of a screw 46, the cilindrical head 48 of which, provided with a hexagonal socket for a male setscrew wrench, is constrained between a flange 50 of the lateral wall 28 of the car radio 20 and the end of a cavity 52 provided on the front panel 44. In such a way, the screw 46 can only rotate in both directions, but cannot move parallel to its own axis.

The screw 46, by passing through a suitable bore of the extension 42 of the slide 26, engages with its own thread a nut 54, housed in a suitable groove of the extension 42, so as to force the slide 26 to reciprocate in either direction when the screw itself is rotated in either rotating direction.

In order to fit the car radio 20 into the mouth 14 of the vehicle dashboard, the car radio itself is first inserted into the standard receptacle with the two fastening devices according to the present invention set in their inoperative position, shown in figure 3.

00348E

Then, by means of a wrench inserted into the head 48 of the screw 46, the screw 46 itself is rotated so as to approach the slide 26 to the front panel 44, causing the two cam sectors 22 and 24 to rotate, which, when rotating, get into the recesses 16 of the standard receptacle.

Continuing to rotate the screw 46, finally the sectors 22 and 24 come into the fastening position, shown in figure 4, and in such a position they clamp, with their cam surface, the curbs 18. According to the thickness of the curbs themselves, the fastening position will be reached at different positioning angles of the cam sectors 22 and 24.

The curvature of the cam of the cam sectors 22 and 24 is such that the reaction forces exerted by the curbs 18 act along straight lines going through the pins 35 and 36 or strictly near them. Such forces thus act through the pins 35 and 36 themselves on the walls 28 of the car radio and do not act on the teeth of the toothing between the sectors 22 and 24 and slide 26: as a result, both the sectors 22 and 24 and slide 26 can be made from inexpensive materials.

As it is well shown in figure 4, it is possible to use the device of the present invention with curbs having thicknesses far wider than the maximun limit and narrower than the minimum limit allowed by the cited standard regulation.

The head of the screw 46 could likewise be provided with a recess for a screwdriver, also of the cruciform type: in any case, the fastening of the car radio by means of devices according to the present invention is carried out by using common tools, of a usual kind, and not by means of special tools, such as those sometimes required by the known devices.

It is to be noted that the various elements which form the device of the present invention can take on different forms. For instance, the extension 42 of the slide 26 could be comprised of two arches located at the ends of the slide itself, only one of which is threaded, or even the bore of the extension 42 could be threaded along the whole

00348E

length or only along part thereof. Furthermore, the cam sectors 22 and 24 could be linked to the slide 26 through levers.

Then only one cam sector can still be provided in each device: in this case, a fixed sloping surface can take the place of the movable cam of the second sector.

In another embodiment (not shown) of the present device, the rotating members have been replaced by the corresponding linearly reciprocating elements, i.e. the cam sectors 22 and 24 have been replaced by corresponding latches, provided with a tapered cam-shaped tooth and reciprocated by the slide through a link block coupling, with a right angle motion with respect to the slide itself.

Futhermore, it is obvious that the device according to the present invention can equally well be located at the inner surface of the side walls of the car radio, or even elsewhere on the car radio itself.

It is obvious that other numerous and different changes and modifications can be performed by the skilled in the art on the embodiment form of the present invention hereinbefore described, without departing from its scope. It is intended therefore that all these changes and modifications are encompassed in the field of this invention.

00348E

## CLAIMS

1. A device for fastening a car radio to the dashboard of a vehicle provided with a space with a number of curbs (18) made between an insertion mouth (14) and respective recesses (16), which device is characterized in that one or more locking cam members are moved from an inoperative position, which is inside the outline of the mouth of the dashboard, to a fastening position, in which each locking cam member extends into a relating recess (16) and its cam engages and blocks the relating curb (18).

2. A device according to claim 1, characterized in that said locking member comprises a sector (22, 24), hinged on the car radio around a pin (35, 36).

3. A device according to claim 2, characterized in that two opposite locking members are rotated by means of a reciprocating slide (26).

4. A device according to claim 2, characterized in that a locking member opposite to a sloping surface is rotated by means of a reciprocating slide.

5. A device according to claim 3 or 4, characterized in that said slide (26) is reciprocated by means of the rotation in either direction of a screw (46), axially constrained to the car radio.

6. A device according to any one of claims 3 to 5, characterized in that the locking member or members (22, 24) and slide (26) are engaged with each other by means of toothings.

7. A device according to any one of claims 3 to 6, characterized in that said slide (26) is provided with an extension (42), reciprocable in a slot (34) of the car radio.

8. A device according to claim 7, characterized in that said extension (42) is bored and has thread means for engagement with said screw (46).

00348E

9. A device according to claim 1, characterized in that said locking member comprises a latch, reciprocable in the car radio and provided with a tapered cam-shaped tooth.

00348E

0218556

FIG. 1

FIG. 2

FIG. 5

FIG. 3

FIG. 4

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 915 333 (BECKER AUTORADIOWERK GmbH) * Whole document * | 1,2 | B 60 R 11/02 |
| A | US-A-3 469 874 (MERCURIO) * Column 2, line 57 - column 3, line 10; figures 3,4 * | 3,4,6 | |
| A | EP-A-0 028 863 (N.V. GLOEILAMPENFABRIEKEN) * Page 4, line 29 - page 6, line 19; figures 1,2 * | 5,7-9 | |
| A | FR-A-2 486 173 (LA RADIOTECHNIQUE) * Figures 1-3 * | 5,7,8 | |

---

| | | | TECHNICAL FIELDS SEARCHED (Int. Cl.4) |
|---|---|---|---|
| | | | B 60 R<br>H 05 K<br>E 05 B<br>E 05 C |

The present search report has been drawn up for all claims

| Place of search | Date of completion of the search | Examiner |
|---|---|---|
| THE HAGUE | 03-12-1986 | MAUSSER, T. |